# EUROPEAN PATENT APPLICATION

(11) **EP 2 587 633 A1**
(43) Date of publication of application: **01.05.2013**
(21) Application number: 11800212.0
(22) Date of filing: 08.06.2011
(51) Int. Cl.: H02K 1/27, H02K 1/28

(54) **MAGNET COVER PLATE MODULE FOR GENERATORS, ARRANGEMENT, AND METHOD FOR MOUNTING AND REMOVING SAME**

(30) Priority: 28.06.2010 ES 201000838
(71) Applicant: Gamesa Innovation & Technology, S.L., 31621 Sarriguren (Navarra) (ES)
(72) Inventor: RASMUSSEN, Peter, 5700 Svendborg (DK)
(86) International application number: PCT/ES2011/000192
(87) International publication number: WO 2012/001184

(57) **Abstract**

The present invention describes a magnet cover plate module for positioning and protecting permanent magnets individually on a rotor's yoke for wind turbine generators. Said magnet module comprising a magnet cover plate made of a soft magnetic material for covering said permanent magnets individually, a non-magnetic plate is permanently fixed to said magnet cover plate, said non-magnetic plate comprises means for fixing said magnet cover plate module to an outer surface of said rotor's yoke, said fixing means being removable so as to allow mounting and dismounting of said cover plate module individually. Additionally a magnetic extender configured for guiding magnetic flux and avoid flux leakage is arranged on an inner surface of the rotor's yoke. Related methods of mounting, dismounting and repairing permanent magnets are equally described.

## Description

### FIELD OF THE INVENTION

The present invention refers to magnet assemblies or arrangements and mounting or dismounting methods for generators in wind turbines, specially permanent magnets (2) mounted on a yoke's (6) surface.

### BACKGROUND OF THE INVENTION

Wind turbines convert wind kinetic energy into mechanical energy which is subsequently converted into electricity. Ever increasing sizes of needed output power levels result in an increasing size of wind turbines components that finally turn out to require complicated and burdensome manufacturing methods. Robust systems are needed. Furthermore, rotor yokes (6) of wind turbines need to rotate at an ever increasing speed. This necessarily results in increased centrifugal forces for said permanent magnets and the need for anchoring, fixing and retaining the magnets firmly on said yoke (6).

Conventional methods of mounting or assembling magnets are based on mounting magnet units directly onto rotor yokes (6) or stators. Rotor yokes (6) and stator magnet supports are generally of circular or curved cross section. Mounting of individual permanent magnets onto curved shaft surfaces mostly requires dedicated work stations and is intrinsically time consuming. This results in low efficiency in terms of assembly time and capacity. Furthermore, fixing said magnets on a curved surface, or a namely a surface having a curvature, further complicates a firm, permanent and stable attachment.

The prior art includes published Japanese application JP-2009-171736 describing a cover plate where the permanent magnets are inserted and at regular positions of a rotor surface of a motor. Said cover plate constitutes a layer covering several magnets at the same time.

Published document DE102005048731 describes a laminated yoke with retaining overhangs aligned radially. Said overhangs hold the extreme portions of the permanent magnets.

Furthermore, Patent document US2006220483 describes compliant layers and spacers that provide mechanical stress in between an arrangement of permanent magnets on a rotor.

Patent document IT8467083 describes permanent magnets having holes for bolts fixed or screwed on the rotor.

Furthermore, conventional solutions found in the prior art include the use of bonding resins and other materials between the yoke surface and the permanent magnet.

An object of the present invention is to provide a magnet assembly that provides an easy-to-mount operation and also a mounting, dismounting method for repairing and repair method that is quick, inexpensive and accurate.

Another object is to provide a modular assembly where permanent magnets can be replaced individually.

In yet another object to provide a method of replacing individual magnets that does not require disassembling the rotor shaft or the yoke from the generator.

Yet another object of the present invention is to provide a method and arrangement that can increase the accuracy or precision of mounted magnets. Regular positioning of magnet units is important to the later electrical and electromagnetic performance on rotors and stators. Thus, a reduced or optimised assembling time can be achieved and effort in saved man hours and costs can be diminished.

Another object of the present invention is to provide a simple method and arrangement capable of making dedicated work stations redundant and thus also capable of saving assembly capacity.

Yet another object is to provide an arrangement that does not hinder or diminish the magnetic flux properties of the magnetic circuit, that guides the magnetic flux to be confined within the desired magnetic or electromagnetic circuit and thus avoid magnetic leakage.

### SUMMARY OF THE INVENTION

The present invention solves at least one of the objects or problems of the prior art. 1. Permanent magnets (2) may be any kind, in particular those made from neodymium, samarium or rare earth materials. The present invention describes a magnet cover plate module (1,4) for positioning and protecting permanent magnets (2) individually on a rotor's yoke (6) in a wind turbine generator, said magnet cover plate module (1,4) comprising a magnet cover plate (1) made of a soft magnetic material configured for covering said permanent magnets (2) individually, wherein a non-magnetic plate (4) is permanently fixed to said magnet cover plate (1), wherein said non-magnetic plate (4) comprises means for fixing said magnet cover plate module (1,4) to an outer surface (9) of said rotor's yoke, said fixing means being removable so as to allow mounting and dismounting of said cover plate module (1,4) individually.

Particularly advantageous is an arrangement for a rotor's yoke (6) that uses said the magnet cover plate module (1,4). It shows additionally a magnetic extender (3) configured for guiding magnetic flux of the wing turbine generator, wherein said magnetic extender (3) is attached to an inner surface (8) of the rotor's yoke (6).

Another embodiment has an arrangement for a rotor's yoke (6) wherein the magnetic extender (3) is attached to the inner surface (8) of the yoke (6) symmetrically around a first axis (A), wherein said first axis (A) is defined by a radial direction of the yoke's overall cylindrical shape, said radial direction crossing the yoke's surface (6) though selected first (7) and second holes (11).

Another embodiment has at least two magnetic extenders (3) disposed symmetrically around a second axis (B), said second axis (B) being defined by a radial direction of the yoke's cylindrical shape, said radial direction crossing the yoke's surface (6) though the centre of the magnet cover width (W). Preferably bolts are used that are capable of being introduced through the first (7) or second (11) holes of the yoke (6) and be attached or screwed thereon.

The arrangement can be made of several modules, namely at least two magnet cover plate modules (1,4) placed side by side on the rotor's yoke surface (9). Said arrangement can thus resemble a mosaic or surface completely covered with tiles, namely that the number of magnet cover plate modules (1,4) placed side by side so that they cover the entire outer surface (8) on the rotor's yoke.

The present invention also describes a method of mounting permanent magnets (2)I individually on a rotor's yoke (6) for a wind turbine generator comprising the steps of placing an individual permanent magnet (2) on an outer surface (9) of a rotor's yoke, placing the permanent magnet cover plate module (1,4) onto said individual permanent magnet (2), aligning second holes (11) on the non-magnetic plate (4) with at least said first holes (7) of the rotor's yoke (6), and attaching the permanent magnet cover plate module (1,4) to the rotor's yoke (6).

Another embodiment additionally shows the attachment of a magnetic extender (3) on the inner (8) surface of said rotor's yoke (6) so as to minimize flux leakage when the rotor is in operation.

Furthermore, the present invention is not only limited to a mounting method. Embodiments of the present invention describe a method of dismounting modules, especially for repair or maintenance work on individual magnets. Said method comprises the steps of accessing a section of a rotor's yoke surface (9), and detaching a at least one permanent magnet cover plate module (1,4) individually from the rotor's yoke surface. Said method may have the additional step of individually detaching at least one magnetic extender (3) on the inner (8) surface of said rotor's yoke.

### FIGURES

Figure 1 shows a preferred embodiment with a cover plate module (1,4) mounted on the outer surface (9) of a yoke (6) and having a magnetic extender (3).
Figure 2 shows an isometric view showing the disposition of a plurality of holes (7) on a yoke (6) for attachment of the individual cover plate modules (1,4).
Fig. 3 shows the increased magnetic flux of the resulting magnetic circuit and two consecutive magnetic extenders (3) mounted on the inner surface (8) of a rotor's yoke (6).

### DESCRIPTION OF THE PREFERRED EMBODIMENTS

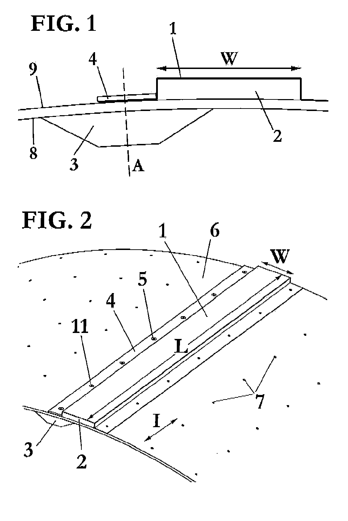

Figure 1 and Figure 2 show different embodiments of the present invention. A non-magnetic plate (4) is permanently attached to a magnet cover plate (1). It is preferably disposed at one side of the magnet cover plate (1), wherein said side may be the length side (L) of the magnet cover plate (1). Said permanent attachment is preferably achieved by welding, gluing, joining or any other suitable fixing means.

The non-magnetic plate (4) comprises means for attaching said non-magnetic plate (4) onto a yoke's (6) external surface (9), preferably these attaching means are second holes (11) that correspond to first holes (7) on the yoke, Bolts with screws may be introduced though first (7) and second holes (11). The screw part of a bolt may be screwed directly to corresponding screw parts in either the first (7) or the second (8) holes. Alternatively, the bolt may be fixed by a nut.

The external surface (9) of a yoke (6) should be understood as the surface facing the stator, stator coils or windings. In fact, the overall three dimensional shape of a rotor is substantially a cylinder. The inner surface (8) of a yoke (6) is understood as the surface facing the axis of said cylinder in its radial direction.

The number and position of said first holes (7) and second holes (11) is selected so as to provide sufficient grip and mechanical stability during all the operations of the rotor and/or different speed regimes, different electrical and magnetic loads as well and providing for wear and tear circumstances, lifetime expectancies and field environmental conditions.

The number of second holes (11) may be between 1 and 12, preferably between 2 and 9 and preferably 7. Said ranges have shown to provide an optimal trade-off between mechanical grip and system complexity.

The number of the second holes (11) need not necessarily correspond to the first holes (7) on the yoke. In fact, provided that the second holes (11) are arranged at regular spaced intervals (I) and that these may be screwed with bolts or other attaching means to the yoke (6), not all the first holes (7) on the yoke need to be used.

These arrangements provide for system flexibility. The number of second holes (11) is advantageously selected so as to minimize perturbation to magnetic properties of the rotor or magnetic flux leakage, save weight at the rotor side and yet achieve sufficient grip for rotor operations without magnet cover plate modules (1) becoming loose or detached while in operation.

The bolt and hole arrangement may be countersunk. Preferred dimensions for the bolts are M8X40, wherein M means metric and the values are bolt diameter and length in millimetres respectively.

Cross sections of the countersunk holes may show several chamfered angles, preferably between 60 degrees and 120 degrees.

A magnetic extender (3) is conveniently attached to the inner surface (8) of the yoke. The term magnetic extender (3) has to be understood as any module or part made of soft magnetic materials aiding in guiding the magnetic flux and/or other magnetic parameters of interest to remain within the confines of a predetermined magnetic circuit. Said magnetic extender (3) thus helps in avoiding magnetic losses or flux leakage. It may be made of any suitable soft magnetic material, in particularly of soft magnetic iron. Said soft magnetic iron may advantageously be made from silicon laminated iron or from solid construction steel.

The shape of the magnetic extender (3) may match the inner surface (8) of the yoke in its length direction (L). As Fig.1 shows the cross section of said magnetic extender (3) is substantially a truncated triangle. Any other shape having a truncated three side polygon may be used. One of the sides of the magnetic extender (3), namely that in contact or attached to the inner surface (8) of the yoke (6) may be curved or slightly curved to substantially adapt to said surface (8). Said truncated triangle is specially simple to manufacture and easy to position and attach. However, other shapes and cross sections are possible, either truncated and non truncated. Magnetic extenders (3) may be installed having quadrilateral or four side polygons. Other suitable cross sections include heptagons, hexagons and other polygons having seven or more sides. The shape of the magnetic extender is however not limited to polygons, and curved cross section shapes may equally be used.

Suitable positioning the magnetic extender (3) on the inner surface (8) of the yoke provides for optimal magnetic properties of the wind generator. Its cross section is preferably positioned symmetrically at the axis (A) defined by the insertion direction of bolts, which coincides with the radial direction of the yoke's cylinder as shown in Fig.1. Thus positioning of said magnetic extender (3) may be centred at axis (A).

Fig. 2 shows a series of first holes (7) disposed at regular intervals (I) along the length direction (L). These may also be disposed at other regular intervals along the perimeter direction from said cylinder.

Although not expressly drawn in Fig.2 two or more magnet cover plate modules (1) with their attached non-magnetic plates (5) may be arranged side by side. These may cover the entire area around the yoke's outer surface (9) and thus form a filled mosaic or modular structure.

It is in this way handling of the permanent magnets (2) during any mounting operation, repair or maintenance is greatly improved. The number of permanent magnets (2) mounted can be selected at any time, repair work can be made at a single permanent magnet cover plate (1) without dismantling or removing other modules.

Additionally, the position of two or more magnetic extenders (3) placed at two consecutive axis (A) belonging to two consecutive non-magnetic plates (4) may equally cover the entire inner surface (8) of the yoke (6).

The number of magnetic extenders (3) is also modular. One embodiment shows that these can cover the entire inner surface (8) of the yoke. Said magnetic extenders may individually be removed, should maintenance or repair work be needed.

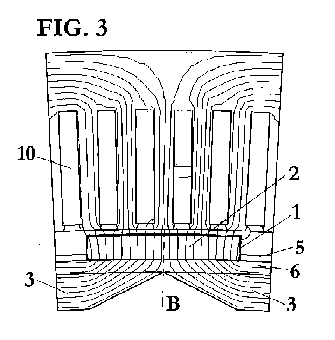

Figure 3 shows the magnetic properties of the rotor arrangement when in combination with the stator (10) of the wind generator. The magnetic flux is represented by lines in the drawing that cross the magnets and the soft magnetic parts. Said lines are directed by the magnetic extender (3) to form a magnetic circuit showing low losses. Flux leakage is minimized by guiding said flux at though the magnetic extender (3).

Fig. 3 further shows a preferred positioning of two consecutive different magnetic extenders (3). These two consecutive magnetic extenders (3) come in close range to each other or contact one another. They further show a symmetric disposition around an axis (B), wherein said axis (B) is defined by the radial axis the permanent magnet's (2) cross section as shown in Fig.3.

First (7) and second (11) holes may advantageously be through holes and cooperate with corresponding third holes made on a surface of the magnetic extender (3). These third holes may be drilled or bored and be provided with a screw part to be fixed to the bolt. Said bolt and hole with a screw party is an arrangement particularly simple that does not require no extra use of adhesives.

Thus, removal of the attaching means or bolts of one module on the yoke's outer surface (9) preferably means the removal of one magnetic extender (3) placed on the inner side surface (8) of the yoke.

The embodiments shown by the figures do not limit in any way. The present invention is defined by the scope of the claims.

## Claims

1. An magnet cover plate module (1,4) for positioning and protecting permanent magnets (2) individually on a rotor's yoke (6) in a wind turbine generator, said magnet cover plate module (1,4) comprising:
- a magnet cover plate (1) made of a soft magnetic material configured for covering said permanent magnets (2) individually; **characterized by**
- a non-magnetic plate (4) permanently fixed to said magnet cover plate (1), wherein said non-magnetic plate (4) comprises means for fixing said magnet cover plate module (1,4) to an outer surface (9) of said rotor's yoke,
- said fixing means being removable so as to allow mounting and dismounting of said cover plate module (1,4) individually.

2. An arrangement for a rotor's yoke (6) comprising
- a magnet cover plate module (1,4) according to claim 1,
- a magnetic extender (3) configured for guiding magnetic flux of the wing turbine generator, wherein
- said magnetic extender (3) is attached to an inner surface (8) of the rotor's yoke (6).

3. An arrangement for a rotor's yoke (6) according to claim 2 wherein
- the magnetic extender (3) is attached to the inner surface (8) of the yoke (6) symmetrically around a first axis (A),
said first axis (A) being defined by a radial direction of the yoke's overall cylindrical shape, said radial direction crossing the yoke's surface (6) though selected first (7) and second holes (11).

4. An arrangement for a rotor's yoke (6) according to claim 2 or 3, wherein
- the magnetic extender (3) has a cross section having the two dimensional shape of a polygon.

5. An arrangement for a rotor's yoke (6) according to claim 4, wherein said polygon is substantially a truncated triangle.

6. An arrangement for a rotor's yoke (6) according to claim 2 or 3,
having at least two magnetic extenders (3) disposed symmetrically around a second axis (B),
said second axis (B) being defined by a radial direction of the yoke's cylindrical shape, said radial direction crossing the yoke's surface (6) though the centre of the magnet cover width (W).

7. An arrangement for a rotor's yoke (6) according to claim 2 or 3, wherein
- the fixing means of the non-magnetic plate (4) are second holes (11) adapted to correspond to first holes (7) of the rotor's yoke.

8. An arrangement for a rotor's yoke (6) according to claim 7, comprising
- bolts capable of being introduced to the first (7) or second (11) holes of the yoke (6) and be attached or screwed thereon.

9. An arrangement for a rotor's yoke (6) according to claim 2 or 3, comprising
- at least two magnet cover plate modules (1,4) placed side by side on the rotor's yoke surface (9).

10. An arrangement for a rotor's yoke (6) according to claim 9, comprising
- a number of magnet cover plate modules (1,4) placed side by side so that they cover the entire outer surface (8) on the rotor's yoke.

11. A method of mounting permanent magnets (2)I individually on a rotor's yoke (6) for a wind turbine generator comprising the steps of:
- individually placing at least one permanent magnet (2) on an outer surface (9) of a rotor's yoke,
- individually placing at least one permanent magnet cover plate module (1,4) onto said individual permanent magnet (2),
- aligning second holes (11) on the non-magnetic plate (4) with at least said first holes (7) of the rotor's yoke (6),
- attaching the permanent magnet cover plate module (1,4) to the rotor's yoke (6).

12. A method of mounting permanent magnets (2) individually according to claim 11, further comprising the step of:
- individually attaching at least one magnetic extender (3) on the inner (8) surface of said rotor's yoke (6) so as to minimize flux leakage when the rotor is in operation.

13. A method of dismounting or repairing permanent magnets individually (2) on a rotor's yoke (6) in a wind turbine generator comprising the steps of:
- accessing a section of a rotor's yoke surface (9),
- individually detaching at least one permanent magnet cover plate module (1,4) according to claim 1 from the rotor's yoke surface (6),

14. A method of dismounting or repairing permanent magnets (2) individually according to claim 13, further comprising the step of:
- individually detaching at least one magnetic extender (3) on the inner (8) surface of said rotor's yoke.
